# EUROPEAN PATENT APPLICATION

(11) **EP 3 240 064 A1**
(43) Date of publication of application: **01.11.2017**
(21) Application number: 16167342.1
(22) Date of filing: 27.04.2016
(51) Int. Cl.: H01M 2/14, H01M 2/16, H01M 4/131, H01M 4/14, H01M 4/24, H01M 4/32, H01M 4/505, H01M 10/052, H01M 10/30, H01M 10/34

(54) **METHOD OF MANUFACTURING A SEPARATOR FOR A BATTERY AND SEPARATOR FOR A BATTERY**

(71) Applicant: University of Vienna, 1010 Vienna (AT)
(72) Inventor: PASCHINGER, Werner, 3804 Allentsteig (AT)
(74) Representative: Dummett Copp LLP

(57) **Abstract**

A method of manufacturing a separator for a battery comprises the steps of:
preparing a high internal phase emulsion (HIPE) from a liquid electrolyte and a continuous phase comprising a mixture of a monomer, a crosslinking agent, a surfactant, and an initiator;
the liquid electrolyte forming a dispersed phase making up 75-95% by volume of the HIPE;
coating a film of the HIPE on a battery electrode substrate; and
irradiating or heating the film to cause polymerisation and cross-linking of the continuous phase.

## Description

### BACKGROUND

### a. Field of the Invention

The present invention relates to a method of manufacturing a separator for a battery, and to a battery which includes a separator manufactured according to the method.

### b. Related Art

A separator is a permeable membrane located between a battery's cathode and anode. Currently, thin film Li-ion batteries consist of four layers: an anode foil, a separator, a cathode foil and a separator, which have to be wound up or stacked, assembled in a housing prior to being soaked with electrolyte. Their production involves a multitude of processing steps and is, therefore, complex, material intensive, time consuming and costly.

Polymer separators are known. For example, US 2011/0189579 discloses an electrolyte that includes a continuous meso- or nanoporous component and a polymer electrolyte phase having a conductive matrix or continuous conducting component.

Polymer separators typically increase the resistance of the electrolyte by a factor of four to five. The ratio of the resistance of the electrolyte-filled separator to the resistance of the electrolyte alone is called the MacMullin number. Accordingly, it is desirable to minimise the MacMullin number in batteries.

### SUMMARY OF THE INVENTION

Aspects of the invention are specified in the independent claims. Preferred features are specified in the dependent claims.

Our new approach provides a one pot synthesis of an electrolyte filled macroporous polymer separator using a technique called emulsion templating. The latter is a method that uses high (or medium) internal phase emulsions (H(M)IPEs), which contain polymerisable components in the continuous phase, as template for the synthesis of highly permeable, macroporous polymers with a well-defined and highly interconnected pore structure. We successfully prepared polymerisable HIPEs containing liquid electrolytes suitable for use in rechargeable batteries, as internal templating phase. This not only allows synthesis of *in-situ* electrolyte filled separators, but also bears the potential to simplify the manufacturing of (thin film) Li-ion batteries. HIPE templates are highly viscous but liquid formulations, which can be used as inks and, therefore, may be directly printed or cast on the battery's electrodes. Solidification of the macroporous scaffold for the electrolyte was achieved by UV polymerisation.

We successfully prepared *in situ* Li+-electrolyte-filled polyHIPE separator membranes with MacMullin numbers that are at least by a factor of two lower than for commercial used separators. We found that the MacMullin numbers are dependent on the polyHIPEs microstructure which can be varied by the amount of emulsifier used as well as the amount of internal phase. Both parameters can be influenced during sample preparation procedure. Furthermore the HIPE templated formulation can be printed as thin films and UV-polymerized in presence of oxygen by using the described mixture of initiators. The polyHIPE material itself possesses thermal stabilities up to 200°C but also seems to consist of some kind of thermal shut down behaviour. Without wishing to be bound by theory, we believe that this behaviour may be attributed to side chain effects.

In addition to Li+ electrolytes, we have also prepared polyHIPE separator membranes, which include liquid electrolytes suitable for other types of battery; for example lead/acid batteries and nickel metal hybrid batteries.

### BRIEF DESCRIPTION OF THE DRAWINGS

The invention will now be further described, by way of example only, with reference to the following drawings, in which:
Figure 1 is a schematic showing a method of preparing a separator for a battery in accordance with an embodiment of the present invention;
Figure 2 is an SEM picture of an RT-IL Li⁺-electrolyte polyHIPE film directly cast onto a Li₄Ti₅O₁₂ electrode in accordance with an embodiment of the invention;
Figure 3 shows a detail of the microstructure of the separator of Figure 2;
Figure 4 is a graph showing conductivity of pure electrolyte and the *in situ* electrolyte-filled polyHIPE of the separator shown in Figure 2;
Figure 5 is a graph showing a galvanostatic charge and discharge cycle of a battery including the separator of Figure 2; and
Figure 6 is an SEM picture showing the microstructure of a separator in accordance with another embodiment of the invention.

### DETAILED DESCRIPTION

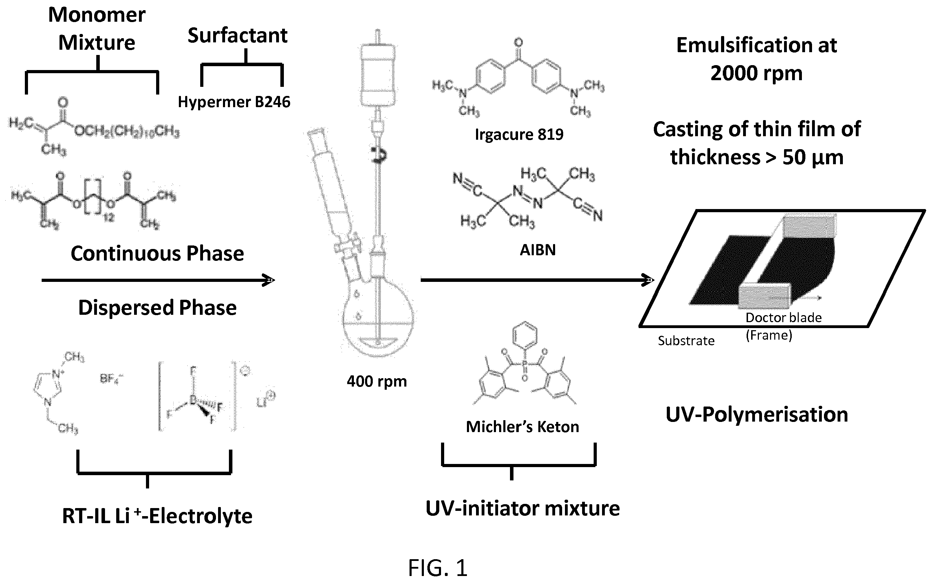

Various separators were prepared using the schematic shown in Figure 1. Experimental details are given below.

### In situ Room Temperature Ionic Liquid based Lithium ion electrolyte filled polyHIPE separators

### Experimental

All the following work was done under a water- and oxygen-free argon atmosphere (H₂O < 0.5 ppm, O₂ < 0.5 ppm).

The continuous minority phase was prepared by dissolving the surfactant (7.5 wt% with respect to the amount of monomer and crosslinker) in a mixture of lauryl methacrylate (LMA) and 1,12-Dodecanediol dimethacrylate (DDDMA) at a monomer to crosslinker molar ratio of 1:1.

The surfactant was Hypermer B246, an A-B-A block copolymer with hydrophobic A chains consisting of polyhydroxystearic acid and the B hydrophilic part being polyethylene glycol, kindly provided by Croda Corporation.

The dispersed phase was a 0.5 mol·l⁻¹ of a lithium tetrafluoroborate (LiBF₄) in 1-ethyl-3-methylimidazolium tetrafluoroborate [EMIM][BF₄].

As initiator an equimolar mixture of 2,2'-azo(bis)(2-methylpropionitrile) (AIBN), bis(2,4,6-trimethylbenzoyl)-phenylphosphineoxide (Irgacure 819) and 4,4'-bis(dimethylamino) benzophenone (Michler's ketone), 1 mol% with respect to the total number of C-C double bonds, was used, covering the whole spectrum of the medium pressure mercury lamp.

Room temperature ionic liquid (RT-IL) based *in situ* electrolyte filled high internal phase emulsions (HIPEs) were prepared in a glass reaction vessel using a glass paddle rod connected to an overhead stirrer. The dispersed phase (85%, 42.5 ml) was added drop-wise into the continuous phase (15%, 7.5 ml) at a stirring rate of 400 rpm. After the dispersed phase was added, the initiator mixture was added and the stirring speed was increased to 2000 rpm for 2 min for final emulsification (scheme see Fig. 1).

The HIPE was then cast directly onto a Li₄Ti₅O₁₂ (LTO) electrode soaked with electrolyte using an adjustable film applicator (K Control Coater with K101 Paint applicator). An UV lamp (100W, 365 nm, 50 Hz, 2 A, Black-Ray, B-100AP High Intensity, UVP, Cambridge, UK) was used to initiate polymerisation. The distance between the HIPE film and the lamp was set to 3.0 cm and the time of irradiation to 5 min.

### Characterization

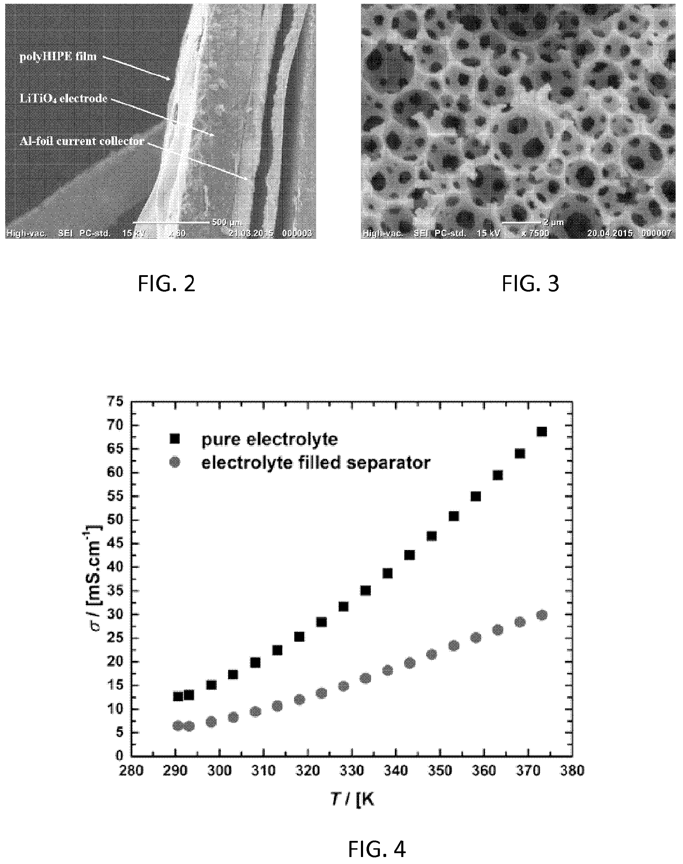

Fig. 2 shows a SEM-Picture of the in situ RT-IL Li⁺-electrolyte polyHIPE film directly cast onto a Li₄Ti₅O₁₂ electrode. Fig. 3 gives a detail picture of the separator's microstructure showing an open porous network.

The separator shows a conductivity of 5.1 mS•cm-¹ at 25°C (Fig. 4). Compared to the conductivity of the pure electrolyte, the conductivity is only lowered by a factor of 1.7 by the polyHIPE separator (Fig 4).

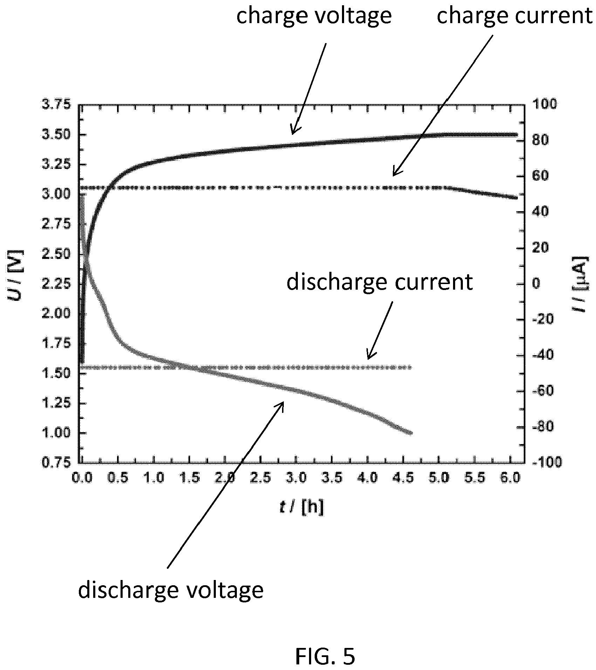

Referring now to Fig. 5, the first galvanostatic charge and discharge cycle of LTO/*in situ* Li[EMIM][BF₄] filled polyHIPE separator/NMC battery is shown. Galvanostatic cycling against NMC (LiNi_{1/3}Mn_{1/3}Co_{1/3}O₂) as the cathode material shows reversible Li⁺ intercalation.

### In situ 20% KOH filled polyHIPE separators

### Experimental

All the following work was done at normal atmosphere.

The continuous minority phase was prepared by dissolving the initiator (10 mol% with respect to the total number of C-C double bonds) and the surfactant in a mixture of lauryl methacrylate (LMA) 1,12-dodecanediol dimethacrylate (DDDMA) at a monomer to crosslinker molar ratio of 1:1.

The initiator was 2-hydroxy-2-methyl-1-phenyl-propan-1-one (Darocure 1173). The surfactant was Cithrol polyethylene glycol 30 dipolyhydroxystearate (Cithrol DPHS) kindly provided by Croda Corporation.

The dispersed phase was a 20 wt% solution of KOH in distilled water
*In situ* KOH electrolyte filled high internal phase emulsions (HIPEs) were prepared in a glass reaction vessel using a glass paddle rod connected to an overhead stirrer. The dispersed phase (45 ml, 90%) was added drop-wise into the continuous phase (5.0 ml, 10%) at a stirring rate of 400 rpm. After the dispersed phase was added, the stirring speed was increased to 2000 rpm for 2 min for final emulsification.

The HIPEs were then casted directly onto either Ni(OH)₂ or NiMH electrodes soaked up with electrolyte using an adjustable film applicator (K Control Coater with K101 Paint applicator). A DYMAX Light curing System UV C-8 (880 mW/cm², 1 m·min⁻¹, 1-2 runs) was used to initiate polymerisation.

### Results

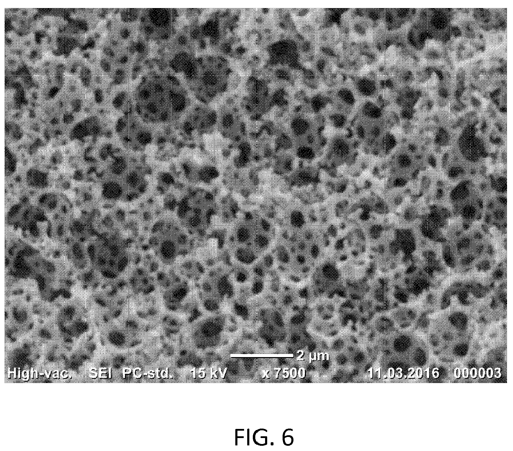

Fig. 6 shows the open porous microstructure of the *in situ* KOH electrolyte filled polyHIPE separator. The separator is suitable for use in nickel/metal hydride batteries.

### In situ 37% H₂SO₄ filled polyHIPE separators

### Experimental

All the following work was done at normal atmosphere.

The continuous minority phase was prepared by dissolving the initiator (10 mol% with respect to the total number of C-C double bonds) and the surfactant (25 wt% with respect to the amount of monomer and crosslinker) in a mixture of lauryl methacrylate (LMA) 1,12-dodecanediol dimethacrylate (DDDMA) at a monomer to crosslinker molar ratio of 1:1.

The initiator was bis(2,4,6-trimethylbenzoyl)-phenylphosphineoxide (Irgacure 819). The dispersed phase was a 5M H₂SO₄ purchased from Sigma Aldrich.

*In situ* H₂SO₄ electrolyte filled high internal phase emulsions (HIPEs) were prepared in a glass reaction vessel using a glass paddle rod connected to an overhead stirrer. The dispersed phase was added drop-wise into the continuous phase at a stirring rate of 400 rpm. After the dispersed phase was added, the stirring speed was increased to 2000 rpm for 2 min for final emulsification.

The HIPEs were then cast directly onto Pb-foil using an adjustable film applicator (K Control Coater with K101 Paint applicator). A DYMAX Light curing System UV C-8 (880 mW/cm², 1 m·min⁻¹, 1-2 runs) was used to initiate polymerisation.

### Results

UV-curing resulted in a stable polyHIPE film, which we believe will be suitable for use in a lead-acid battery.

### In situ organic solvent based Lithium ion electrolyte filled polyHIPE separators

### Experimental

All the following work was done under a water- and oxygen-free argon atmosphere (H₂O < 0.5 ppm, O₂ < 0.5 ppm).

The continuous minority phase was prepared by dissolving two surfactants, Hypermer B246, a *A-B-A* block copolymer with *hydrophobic A* chains consisting of polyhydroxystearic acid and the *B* hydrophilic part being polyethylene glycol, and Cithrol 6MS, an ethoxy(12)stearate, (each 7.5 wt% with respect to the amount of monomer and crosslinker) in a mixture of stearyl methacrylate (SMA) and 1,12-dodecanediol dimethacrylate (DDDMA) at a monomer to crosslinker molar ratio of 2:1.

The dispersed phase was a 1.0 mol/l solution of lithium hexafluorophosphate (LiPF₆) in a 1:1 vol.% mixture of propylene carbonate (PC) and dimethyl carbonate (DMC).

As initiator 1 mol%, with respect to the total number of C-C double bonds, of an equimolar mixture of 2,2'-azo(bis)(2-methylpropionitrile) (AIBN), bis(2,4,6-trimethyl benzoyl)-phenyl-phosphineoxide (Irgacure 819) and 4,4'-bis(dimethylamino) benzophenone (Michler's ketone), was used. This initiator mixture covers the entire emission spectrum of a medium pressure mercury lamp.

Organic solvent based in-situ electrolyte filled high internal phase emulsions (HIPEs) were prepared in a glass reaction vessel using a glass paddle rod connected to an overhead stirrer. The dispersed phase (85%, 42.5 ml) was added dropwise into the continuous phase (15%, 7.5 ml) at a stirring rate of 500 rpm.

After the dispersed phase was added, the initiator mixture was added and the stirring speed was increased to 1000 rpm for 2 min for final emulsification.

The HIPE was then cast directly onto a dry LiNi_{1/3}Mn_{1/3}Co_{1/3}O₂ (NMC) electrode using an adjustable film applicator (K Control Coater with K101 Paint applicator). An UV lamp (100 W, 365 nm, 50 Hz, 2. A, Black-Ray, B-100AP High Intensity, UVP, Cambridge, UK) was used to initiate polymerisation. The distance between the HIPE film and the lamp was set to 3.0 cm and the time of irradiation to 5 min.

### Results

An SEM of the polyHIPE is shown in Fig. 6. The (*in-situ*) electrolyte-filled polyHIPE separator has an ionic conductivity of 3.4 mS•cm⁻¹ at 25°C. Compared to the conductivity of the pure electrolyte, the conductivity decreased by a factor of 3.2 due to the presence of the polyHIPE separator.

The separator is thermally stable up to a temperature of at least 200°C.
Upon drying, i.e. the removal of the electrolyte phase, from the polyHIPE, the polyHIPE separator film shrinks but it can be again re-filled with the electrolyte and swells again to its original size, which is usually not possible for other polyHIPE separator formulations. Therefore, it is possible to print the electrolyte-in-oil HIPE template directly onto dry porous electrodes. Usually, in this case the electrolyte will be wicked ("sucked") out of the HIPE formulation, which impedes the formation of a working battery separator. In all other cases it is necessary to soak the electrode in electrolyte and print the HIPE precursor on to the wet electrode prior to polymerisation.

While the invention has been exemplified with respect to methacrylate monomers and methacrylate crosslinking agents, the invention is not limited to use of methacrylates. It will be appreciated that alternative vinyl and di- or multi-vinyl monomers may be used and may be polymerised by various curing means known to those skilled in the art, including irradiation, notably UV-irradiation, and by heating if a thermal initiator is used.

## Claims

1. A method of manufacturing a separator for a battery, the method comprising the steps of:
preparing a high internal phase emulsion (HIPE) from an ionic liquid and a continuous phase comprising a mixture of a monomer, a crosslinking agent, a surfactant, and an initiator;
the ionic liquid forming a dispersed phase making up 75-95% by volume of the HIPE;
coating a film of the HIPE on a battery electrode substrate; and
UV initiation or heating the film to cause polymerisation and cross-linking of the continuous phase.

2. A method according to claim 1, wherein the ionic liquid is aqueous sulphuric acid.

3. A method according to claim 1, wherein the ionic liquid is aqueous potassium hydroxide.

4. A method according to claim 1, wherein the ionic liquid is a solution of a lithium salt, preferably lithium hexafluoroarsenate (LiAsF₆) or lithium hexafluorophosphate (LiPF₆) in an organic solvent, preferably a mixture of propylene carbonate and dimethyl carbonate.

5. A method according to claim 1, wherein the ionic liquid is a solution of 1 mol/l lithium hexafluoroarsenate (LiAsF₆) or lithium hexafluorophosphate (LiPF₆) in a 1:1 vol% mixture of propylene carbonate and dimethyl carbonate.

6. A method according to claim 1, wherein the ionic liquid is a lithium salt, preferably lithium tetrafluoroborate (LiBF₄), in 1-ethyl-3-methylimidazolium tetrafluoroborate [EMIM][BF₄].

7. A method according to any one of the preceding claims, wherein the monomer is a methacrylate, preferably lauryl methacrylate (LMA) and/or stearyl methacrylate (SMA), and wherein the crosslinking agent is a dimethacrylate, preferably 1,12-dodecanedimethacrylate (DDDMA) and/or 1,14-tetradecanedimethacrylate (TDDMA).

8. A method according to any one of the preceding claims, wherein the molar ratio of monomer to crosslinking agent is in the range 2:1 to 1:2, preferably about 1:1.

9. A method according to any one of the preceding claims, wherein the HIPE is prepared by adding the ionic liquid drop-wise to the continuous phase with stirring, followed by addition of the initiator and then further homogenisation.

10. A method according to claim 2, wherein the battery electrode substrate is made of lead (Pb).

11. A method according to claim 3, wherein the battery electrode substrate is made of a nickel material, preferably Ni(OH)₂, or Nickel-Metal Hydride (NiMH).

12. A method according to any one of claims 4-6, wherein the battery electrode substrate is made of a lithium titanate, preferably Li₄Ti₅O₁₂ or Li₂TiO₃ or wherein the battery electrode substrate is made of a carbon material, preferably graphite, or wherein the battery electrode substrate is LiNi_{1/3}Mn_{1/3}Co_{1/3}O₂ (NMC), preferably dry NMC.

13. A method according to any one of the preceding claims, wherein the film is coated on the battery electrode substrate by means of an adjustable film applicator or by printing.

14. A method of manufacturing a separator for a battery, the method comprising the steps of:
preparing a high internal phase emulsion (HIPE) from an aqueous solution of sulphuric acid or potassium hydroxide and a continuous phase comprising a mixture of a methacrylate, a dimethacrylate, a surfactant, and an initiator,
the aqueous solution forming a dispersed phase making up 75-95% by volume of the HIPE;
coating a film of the HIPE on a battery electrode substrate; and
irradiating or heating the film to cause polymerisation and cross-linking of the continuous phase.

15. A battery including a separator manufactured by the method of any one of the preceding claims.
